# EUROPÄISCHE PATENTANMELDUNG

(11) **EP 1 332 918 A2**
(43) Veröffentlichungstag der Anmeldung: **06.08.2003**
(21) Anmeldenummer: 02028204.2
(22) Anmeldetag: 14.12.2002
(51) Int. Cl.: B60R 5/04

(54) **Kraftfahrzeug mit einem verlängebarem Laderaum und einer Laderaumtür**

(30) Priorität: 29.01.2002 DE 10203538
(71) Anmelder: Webasto Vehicle Systems International GmbH, 82131 Stockdorf (DE)
(72) Erfinder: de Gaillard, Francois, 85390 Mouilleron en pareds (FR)
(74) Vertreter: Konnerth, Dieter Hans

(57) **Zusammenfassung**

Die Erfindung betrifft ein Kraftfahrzeug, insbesondere einen Personenkombikraftwagen, mit einem im Fahrzeugheck (2) angeordneten Laderaum (3), einem heckseitig ausfahrbaren Ladeboden (16) und einer Laderaumtür (4) für die heckseitige Laderaumöffnung, die an dem Ladeboden (16) schwenkbar gelagert ist. In vorteilhafter Ausgestaltung ist die Laderaumtür (4) an einer Seitenstruktur (18) des Ladebodens (16) um eine Vertikalachse (20) schwenkbar gelagert.

## Beschreibung

Die Erfindung betrifft ein Kraftfahrzeug, insbesondere einen Personenkombikraftwagen, mit einem im Fahrzeugheck angeordneten Laderaum und einer Laderaumtür für die heckseitige Laderaumöffnung.

In der US 4,272,121 A ist ein Kombikraftwagen offenbart, der einen Laderaum und eine heckseitige Laderaumtür enthält, die an der Karosserie seitlich um eine Vertikalschwenkachse angelenkt ist. Die Laderaumtür enthält eine Heckscheibe, die in die Laderaumtür absenkbar ist und oberhalb der Laderaumtür rahmenlos geführt ist. Ein Hinterabschnitt des Fahrzeugdaches enthält eine Dachöffnung, die von einem am Fahrzeugdach verschiebbar gelagerten Deckel verschließbar ist. Wenn der Deckel nach vorne verschoben ist, geht die Dachöffnung in die bei abgesenkter Heckscheibe geöffnete Laderaumöffnung ohne Unterbrechung durch einen hinteren Dachquerrahmen über.

Aus der DE 197 49 158 A1 ist ein Fahrzeug mit einem Laderaum und einem darin angeordneten Ladeboden bekannt geworden, der an zumindest drei Rollen an der Karosserie gelagert und etwa parallel zum Fahrzeugboden aus dem Laderaum nach hinten ausfahrbar ist.

Aus der US 5,692,792 A ist ein Kombikraftwagen bekannt geworden, der eine am Fahrzeugdach angelenkte und nach oben aufschwenkbare Heckklappe aufweist. Im Laderaum ist ein ausziehbarer Laderaumboden verschiebbar aufgenommen, der Seitenwände und an seiner Rückseite eine Rückwand aufweist, die auch um eine untere Querschwenkachse schwenkbar sein kann. Die gesamte heckseitige Laderaumöffnung wird somit von zwei Klappen oder Türen abgedeckt. Gemäß einem Ausführungsbeispiel deckt die oben angelenkte Heckklappe auch die Rückwand des Ladebodens ab.

Die US 3,004,790 A offenbart einen Personenkraftwagen mit Stufenheck, der einen Kofferraum aufweist, der von zwei in Längsrichtung nebeneinander angeordneten Klappen abgedeckt ist, die um äußere Längsschwenkachsen aufgeklappt werden können. Der Kofferraum enthält einen nach hinten ausfahrbaren Ladeboden mit festen Seitenwänden und einer hinteren Klappe, die um eine hintere Querschwenkachse am Hinterende des Ladebodens zwischen einer vertikalen Schließstellung und einer herabgeklappten Beladestellung verstellbar ist.

Aufgabe der Erfindung ist es, einen eingangs genannten Kraftwagen zu schaffen, dessen Laderaum ein variables Nutzvolumen mit guter Zugänglichkeit aufweist.

Diese Aufgabe wird durch einen Kraftwagen mit den Merkmalen des Anspruchs 1 gelöst. Bei diesem Kraftfahrzeug, insbesondere einem Personenkombikraftwagen oder auch einem Pickup oder dergleichen, mit einem im Fahrzeugheck angeordneten Laderaum und einem heckseitig ausfahrbaren Ladeboden ist die Laderaumtür, die auch als Heckklappe bezeichnet werden kann, für die heckseitige Laderaumöffnung an dem Ladeboden schwenkbar gelagert und kann damit mehrere Funktionsstellungen einnehmen. Die Laderaumtür kann sowohl in bekannter Weise die gesamte Laderaumöffnung heckseitig abschließen wie auch mit dem Ladeboden nach hinten vom Fahrzeug weg bewegt werden, wenn der Ladeboden ausgefahren wird.

Vorteilhafte Ausgestaltungen der Erfindung sind in den Unteransprüchen angegeben.

In einer zweckmäßigen Gestaltung ist die Laderaumtür am Hinterende des Ladebodens um eine Querachse schwenkbar gelagert und in Schließstellung mit dem Ladeboden ein- und ausfahrbar. Die z. B. in eine horizontale Stellung geklappte und darin arretierte Laderaumtür kann dann die Ladefläche bzw. den Ladeboden nochmals verlängern.

Der Ladeboden kann ebenflächig gebildet sein oder er enthält auf einer Seite oder beidseits zumindest eine nach oben ragende Seitenstruktur. Diese Seitenstruktur kann der seitlichen Begrenzung des Ladebodens gegenüber den seitlichen Innenwänden des Fahrzeugs dienen oder auch in Verbindung mit Führungseinrichtungen Lager- und Führungsfunktion für den Ladeboden bieten.

Zusätzlich kann die Laderaumtür an der Seitenstruktur um eine Vertikalachse schwenkbar gelagert sein. Die Verschwenkung der Laderaumtür hat den großen Vorteil, daß bei seitlich geöffneter Laderaumtür der unmittelbare Zutritt zu dem Ladeboden möglich ist, ohne daß die ansonsten um eine Querachse herabgeklappte Laderaumtür vor dem Ladeboden angeordnet wäre. Die Laderaumtür kann sowohl rechtsseitig wie auch linksseitig schwenkbar gelagert sein und kann bei Verwendung von Multifunktionsgelenken, die umschaltbar z. B. entweder als Schwenkgelenk oder als Schloßeinrichtung dienen, zwischen linksseitiger und rechtsseitiger Schwenklagerung umgeschaltet werden. Des weiteren läßt sich auch eine schwere Laderaumtür um eine Vertikalschwenkachse manuell leichter verschwenken wie eine um eine Querachse schwenkbar gelagerte Laderaumtür.

Vorzugsweise enthält der Ladeboden beidseits Seitenwände und die Laderaumtür ist an einer der Seitenwände um eine Vertikalachse schwenkbar gelagert.

Die Laderaumtür grenzt zweckmäßigerweise an ihrem Oberende an das Hinterende des Fahrzeugdaches an, wobei ein an einem am Unterteil der Laderaumtür gelagertes Oberteil an oder in das Unterteil absenkbar und bis an das Hinterende des Fahrzeugdaches ausfahrbar sein kann. Durch Absenken des Oberteils kann eine Beladeöffnung freigelegt werden. Insbesondere ist das Oberteil eine am Unterteil geführte Heckscheibe, die ohne einen Rahmen oberhalb des Unterteils der Laderaumtür geführt ist. Die Heckscheibe liegt dann an Dichtungen an der Karosserie dicht an.

In einer bevorzugten Ausgestaltung weist das Fahrzeugdach einen bewegbaren Hinterabschnitt zum Schließen oder Freigeben einer hinteren Dachöffnung auf. Wenn der Hinterabschnitt aus der Dachöffnung entfernt wird und die Dachöffnung freigelegt ist, kann der Laderaum bzw. der Ladeboden im wesentlichen ohne Höhenbeschränkung durch das Fahrzeugdach genutzt werden. Ein besonderer Vorteil ergibt sich, wenn die hintere Dachöffnung ohne Begrenzung durch einen hinteren Dachquerrahmen in die von der Laderaumtür verschließbare Laderaumöffnung übergeht. Dadurch ergibt sich ein Laderaum in der Art eines Pickup, der seitlich durch die Seitenwände des Fahrzeugs und die hinteren Seitenfenster bis hinauf zu den seitlichen Dachrahmen oder Dachlängsholmen geschützt ist.

Der Hinterabschnitt des Fahrzeugdaches ist beispielsweise ein bewegbarer Dekkel, insbesondere Glasdeckel, der am Fahrzeugdach zwischen seiner hinteren Schließstellung und einer vorderen Offenstellung verschiebbar ist, z. B. über die vordere Dachhaut.

Zweckmäßigerweise ist an der einen Seitenwand des Ladebodens zumindest eine Schwenklagereinrichtung für die seitlich schwenkende Laderaumtür angeordnet und an der gegenüberliegenden Seitenwand ist eine Schließeinrichtung für die Laderaumtür vorgesehen. Das Verschließen der Laderaumtür erfolgt damit am Ladeboden unabhängig von der Auszugstellung des Ladebodens.

Wenn die Schwenklagereinrichtung eine bogenförmige Führung aufweist, die eine außerhalb der Laderaumtür liegende Vertikalschwenkachse festlegt, so kann auch eine seitlich über die Seitenwände hinausstehende Laderaumtür sich von außen gegen eine Dichtung, die an der Karosserie angebracht ist und die Laderaumöffnung zumindest teilweise umgibt, anlegen.

Der Ladeboden ist beispielsweise über eine zentrale untere Führung, insbesondere eine Teleskopführung, an der Fahrzeugkarosserie unterhalb des Ladebodens verschiebbar gelagert. Zusätzlich kann der Ladeboden an seinen beiden Seitenwände über karosseriefeste Führungen gelagert sein.

Der Ladeboden kann manuell verschoben werden und in Raststellung festgelegt werden oder er wird mittels einer Antriebseinrichtung bewegt.

Nachfolgend wird ein Ausführungsbeispiel des Kraftwagens unter Bezugnahme auf die Zeichnung näher erläutert. Es zeigt:
- Fig. 1: in einer perspektivischen Heckansicht einen Personenkraftwagen mit einem heckseitigen Laderaum und einer geschlossenen Laderaumtür;
- Fig. 2: in einer perspektivischen Heckansicht den Personenkraftwagen mit geöffneter Laderaumtür;
- Fig. 3: in einer perspektivischen Heckansicht den Personenkraftwagen mit nach hinten ausgefahrenem Ladeboden und daran gelagerter geschlossener Laderaumtür und einem hinteren geöffneten Dachabschnitt;
- Fig. 4: in einer perspektivischen Heckansicht gemäß Fig. 3 den Personenkraftwagen mit geöffneter Laderaumtür;
- Fig. 5: in einer perspektivischen Heckansicht gemäß Fig. 3 den Personenkraftwagen in geöffneter Beladestellung mit im Laderaum aufgenommenem Ladegut;
- Fig. 6: in einer perspektivischen Heckansicht den Personenkraftwagen mit ausgefahrenem Ladeboden mit am Ladeboden geschlossener Laderaumtür;

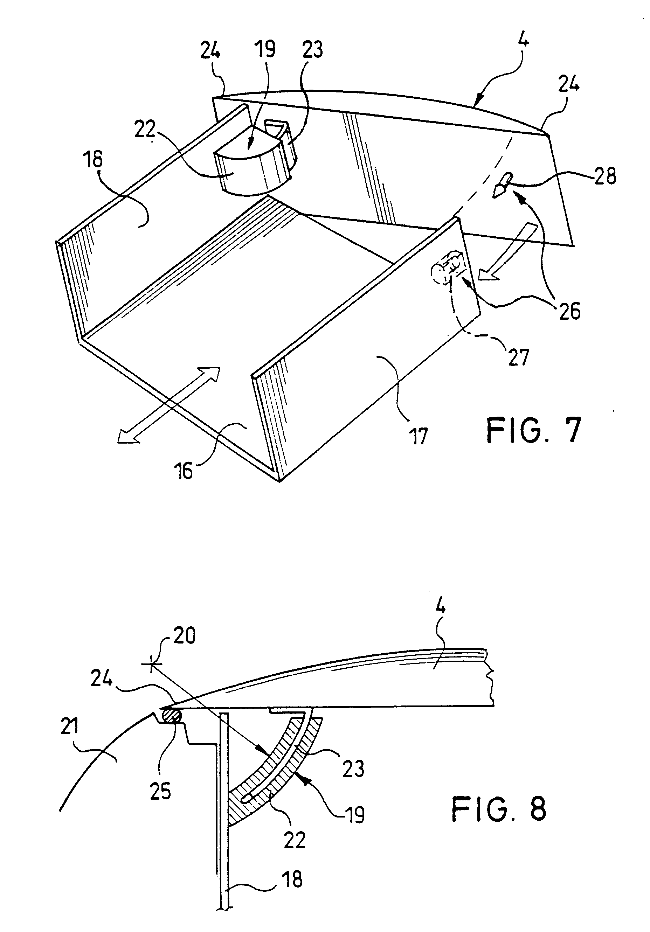

- Fig. 7: in einer perspektivischen Draufsicht in schematischer Darstellung den ausfahrbaren Ladeboden mit der daran seitlich gelagerten Laderaumtür;
- Fig. 8: in einer Oberansicht in schematischer Teildarstellung die Lagerung der Laderaumtür am Ladeboden;
- Fig. 9: in einer perspektivischen Heckansicht ein Kombifahrzeug mit einer abgewandelten Ausführungsform des Ladebodens mit horizontal angelenkter Laderaumtür;
- Fig. 10: in einer perspektivischen Heckansicht das Kombifahrzeug gemäß Fig. 9 mit ausgefahrenem Ladeboden und teilweise hochgeschwenkter Laderaumtür;
- Fig. 11 bis 13: in einer perspektivischen Heckansicht ein weiteres Ausführungsbeispiel des Kombifahrzeugs mit einer abgewandelten Dachschließeinrichtung für die hintere Dachöffnung in unterschiedlichen Stellungen;
- Fig. 14 bis 17: in einer perspektivischen Heckansicht ein weiteres Ausführungsbeispiel des Kombifahrzeugs mit einer Laderaumtür mit abgewandelter Lagerung;
- Fig. 18: in schematischer Seitenansicht das Fahrzeugheck mit der Laderaumtür der Fig. 14 bis 17;
- Fig. 19 und 20: in perspektivischen Heckansichten die in den Fig. 14 bis 17 dargestellte Dachschließeinrichtung in Schließstellung und in Offenstellung; und
- Fig. 21: in Heckdraufsicht die geöffnete Dachschließeinrichtung.

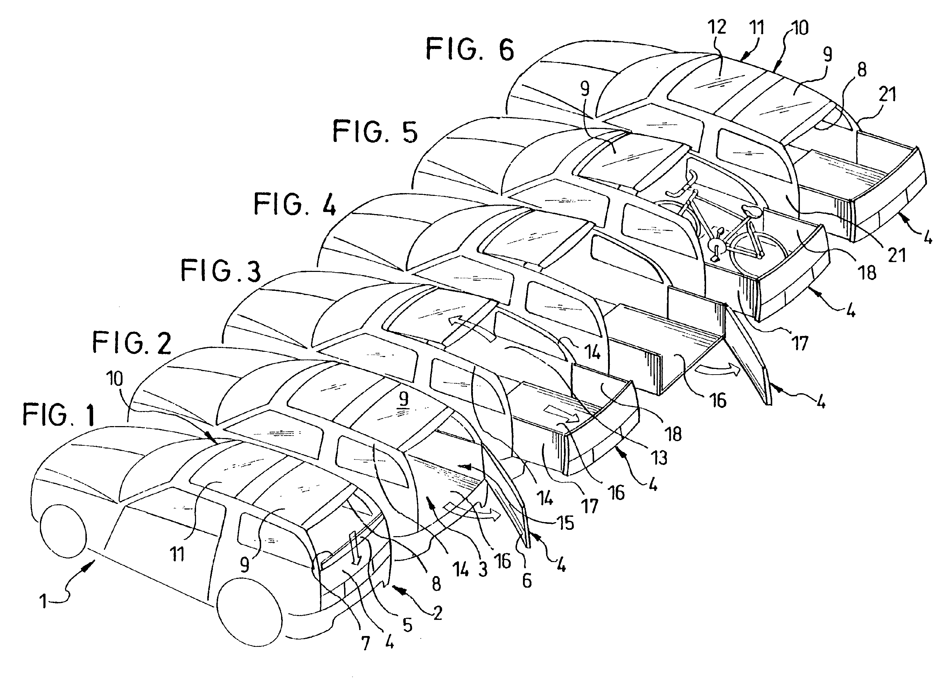

Ein Personenkraftwagen 1 (siehe Fig. 1) wie z. B. ein Kombi enthält ein Fahrzeugheck 2 in Form eines Steil- oder Schräghecks mit einem heckseitigen Laderaum 3, der von einer Heckklappe oder Laderaumtür 4 heckseitig begrenzt ist. Die Laderaumtür 4 enthält als Oberteil eine Heckscheibe 5, die am Unterteil 6 der Laderaumtür 4 verschiebbar gelagert und an dieser oder in diese absenkbar ist, so daß der Laderaum 3 bei abgesenkter Heckscheibe 5 durch die Heckscheibenöffnung von außen zugänglich ist und der Fahrzeuginnenraum be- oder entlüftbar ist. Die Heckscheibe 5 ist vorzugsweise nur an dem Unterteil 6 der Laderaumtür 4 geführt und ist somit in ihrer oberen Schließstellung nicht von einem Scheibenrahmen der Laderaumtür 4 umschlossen.

Die geschlossene Heckscheibe 5 grenzt mit ihrem Oberrand 7 an den Hinterrand 8 eines hinteren Dachteils 9, das am Fahrzeugdach 10 verschiebbar gelagert ist und aus seiner Schließstellung (Fig. 1 und 2) über Zwischenstellungen in seine Offenstellung (Fig. 3 bis 5) nach vorne über den vorderen Dachabschnitt 11, der einen festen oder eine Dachöffnung verschließenden, bewegbaren und insbesondere transparenten Deckel 12 aufweisen kann, bewegbar ist. Das nach vorne verlagerte hintere Dachteil 9 legt eine hintere Dachöffnung 13 frei, die von seitlichen Dachholmen 14 begrenzt ist. Da jedoch das Fahrzeugdach 10 keinen hinteren Dachquerrahmen am Hinterende der hinteren Dachöffnung 13 aufweist, geht diese ohne Unterbrechung durch ein Zwischenteil in die heckseitige Laderaumöffnung 15 über, wenn die Heckscheibe 5 abgesenkt ist oder die Laderaumtür 4 geöffnet ist (siehe z. B. Fig. 3).

Der Personenkraftwagen 1 enthält in seinem Laderaum 3 einen bewegbaren Ladeboden 16, der über Schienen und Roll- oder Gleitelemente an der Karosserie verschiebbar gelagert ist und aus dem Laderaum 3 nach hinten ausschiebbar oder ausfahrbar ist. Der Ladeboden 16 enthält zwei sich gegenüberliegende feste Seitenteile oder Seitenwände 17 und 18, die vom Ladeboden 16 nach oben ragen. An der bezüglich dem Personenkraftwagen 1 rechten Seitenwand 18 ist die Laderaumtür 4 mittels einer Gelenk- oder Scharniereinrichtung 19 mit zumindest einem Gelenk bzw. Scharnier schwenkbar befestigt, so daß sie aufgrund der Scharnierkonstruktion um eine Vertikalachse 20 schwenkbar ist, die z. B. seitlich außerhalb der Laderaumtür 4 und hinter einem heckseitigen Karosserieteil 21, z. B. dem Hinterende des hinteren Seitenteils oder Kotflügels, angeordnet ist. Das Scharnier 19 enthält beispielsweise eine Kreisbogenführung 22, in der ein entsprechend gebildetes und an der Laderaumtür 4 befestigtes Lagerteil 23 verschiebbar geführt ist. Die Laderaumtür 4 steht seitlich über die Seitenwände 17 bzw. 18 über, so daß der Seitenrand 24 der Laderaumtür 4 beim Schließen der Laderaumtür 4 sich an eine an dem Karosserieteil 21 befestigte Dichtung 25 anlegt. Der gegenüberliegende Seitenrand der Laderaumtür 4 legt sich an eine entsprechende Türdichtung an der gegenüberliegenden Seite an. An der dem Scharnier 19 gegenüberliegenden linken Seitenwand 17 ist eine Schließeinrichtung 26 für die Laderaumtür 4 vorgesehen, wobei ein Schloß 27 der Schließeinrichtung z. B. an der Seitenwand 17 und ein Riegelzapfen 28 an der Laderaumtür 4 angeordnet ist (oder auch umgekehrt). Selbstverständlich kann das Scharnier 19 auch an der linken Seitenwand 17 angebracht sein, so daß die links schwenkbar gelagerte Laderaumtür 4 in entgegengesetzter Schwenkrichtung aufschwenkt.

Die Laderaumtür 4 kann somit aus einer Schließstellung (Fig. 1), bei der sie die heckseitige Laderaumöffnung 15 verschließt, durch Verschwenken um ihr Scharnier 19 geöffnet werden, wobei die Heckscheibe 5 geschlossen oder abgesenkt sein kann.

Des weiteren kann die geschlossene Laderaumtür 4 mit dem Ladeboden 16 nach hinten ausgefahren werden (Fig. 6), wobei auch hier die Heckscheibe 5 geschlossen oder abgesenkt sein kann. Diese Stellung kann zum Beladen des Laderaums 3 bei bezüglich des Ladebodens 16 geschlossener, jedoch mit dem Ladeboden 16 nach hinten herausgefahrener Laderaumtür 4 dienen.

Das hintere Dachteil 9 kann sowohl bei geschlossener und an der Karosserie anliegender Laderaumtür 4 wie auch bei nach hinten ausgefahrenem Ladeboden 16 zum Öffnen der hinteren Dachöffnung 13 nach vorne bewegt werden. (Fig. 3). Dadurch ist der Laderaum 3 im Bereich der Dachöffnung 13 nach oben hin ohne Begrenzung und bei ausgefahrenem Ladeboden 16 ist der Laderaum 3 nach hinten um das Auszugsmaß verlängert. Da die Heckscheibe 5 aus ihrer Schließposition an der Karosserie entfernt ist, ist dadurch der vergrößerte Laderaum 3 nach oben frei und unbehindert.

Auch bei ausgefahrenem Ladeboden 16 (siehe Fig. 4 und 6) kann die Laderaumtür 4 bezüglich des Ladebodens 16 geöffnet und geschlossen werden. Dadurch ist der Ladeboden 16 in jeder Auszugstellung hinten begrenzbar und dennoch auch von hinten zugänglich. Durch die seitlich schwenkende Laderaumtür 4 kann unmittelbar an den festen Ladeboden 16 herangetreten werden, was bei einer Heckklappe oder Laderaumtür, die um den hinteren Rand des Ladebodens um eine Querachse schwenkbar angelenkt ist, nicht möglich ist.

Der Ladeboden 16 kann an seiner Vorderseite zum Fahrzeuginnenraum hin zwischen den Seitenwänden eine Begrenzung oder Vorderwand aufweisen. Wenn er ohne Begrenzung gebildet ist, kann bei nach hinten ausgefahrenem Ladeboden 16 die Verlängerung zum Fahrzeuginnenraum hin auch genutzt werden.

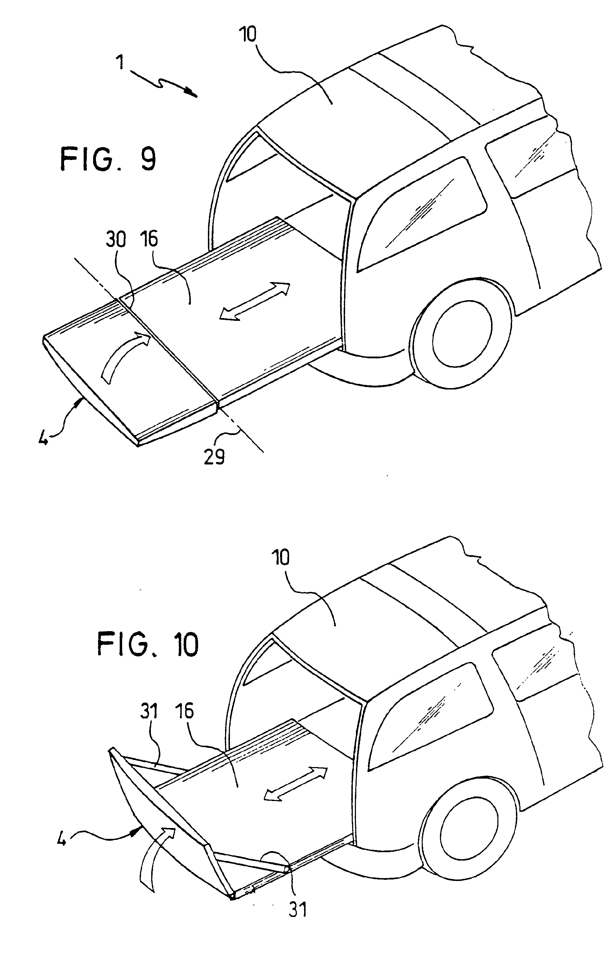

In einer vereinfachten Ausführungsform enthält der Ladeboden 16 keine Seitenwände und ist somit nur als ebene Fläche gebildet (siehe Fig. 9 und 10). Die Laderaumtür 4 ist um eine Querachse 29 am hinteren Rand 30 des Ladebodens 16 mittels einer nicht dargestellten Schwenklagereinrichtung schwenkbar befestigt und mittels seitlicher Zughebel 31, die an den Seiten des Ladebodens 16 verschwenkbar und verschiebbar gelagert und von einer Antriebseinrichtung verstellbar sind, verschwenkbar. Die Funktionsmöglichkeiten und Nutzungsmöglichkeiten entsprechen denjenigen des vorangegangenen Ausführungsbeispiels. Das Dach 10 des Kombifahrzeugs 1 kann geschlossen oder auch mit einer schließbaren Öffnung, wie z. B. in den Fig. 1 bis 6 dargestellt, versehen sein, so daß ebenfalls eine durchgehende Dach-Hecköffnung mit einem vergrößerten Laderaum gebildet werden kann.

Die Laderaumtür 4 kann jedoch auch beim ersten Ausführungsbeispiel (siehe Fig. 1 bis 6) am Hinterrand des Ladebodens 16 um eine Querschwenkachse gelagert sein (nicht dargestellt).

Der verschiebbare Ladeboden 4 kann auch bei einem Pickup oder einem derartigen Fahrzeug verwendet werden, das eine heckseitige Ladefläche aufweist, die nach oben umschlossen oder von einem festen oder zumindest teilweise zu öffnenden Dach begrenzt ist.

Das Dachteil 9 kann mittels einer üblichen Antriebseinrichtung oder in einer einfachen Gestaltung auch manuell verschiebbar sein, um eine kostengünstige Lösung zu schaffen. Das hintere Dachteil kann auch in anderen Formen als einoder mehrteilige Klapp- oder Schiebeeinrichtung gebildet sein.

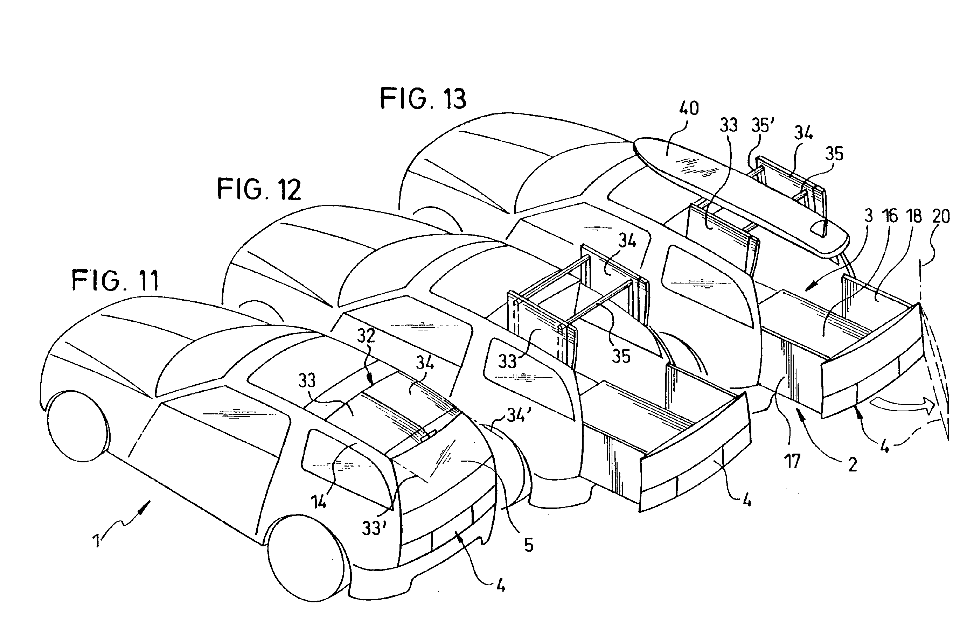

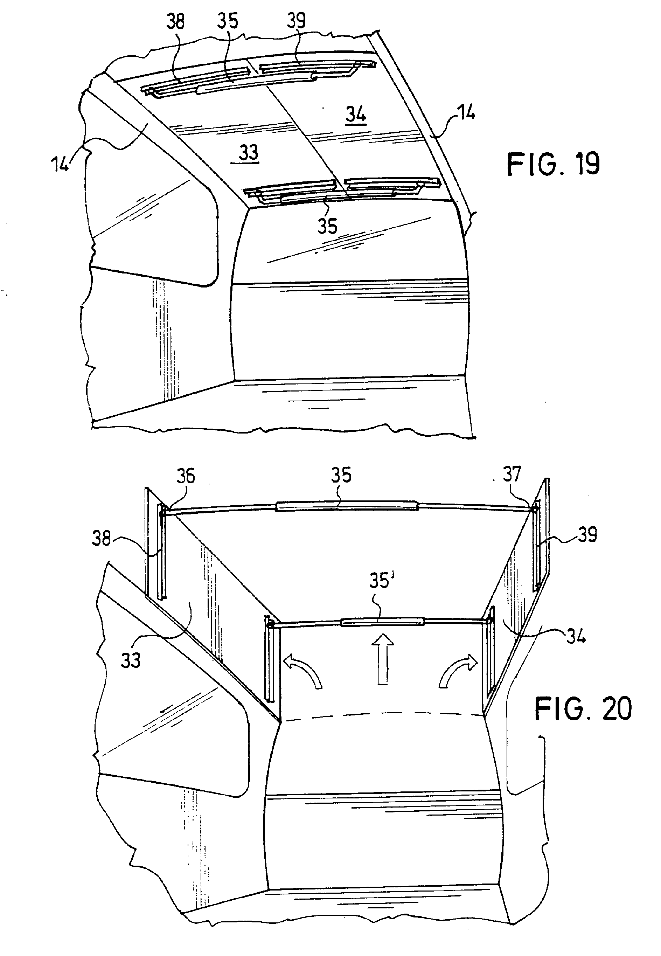

Das in den Fig. 11 bis 13 dargestellte Ausführungsbeispiel eines Personenwagens 1 enthält eine gegenüber dem verschiebbaren Dachteil 9 des Ausführungsbeispiels gemäß den Fig. 1 bis 6 abgeänderte Deckeleinrichtung 32 zum wahlweisen Öffnen oder Verschließen der hinteren Dachöffnung 13 mit einem linken Deckel 33 und einem rechten Deckel 34, die jeweils um eine am seitlichen Dachholm 14 in Längsrichtung angeordnete Schwenkachse 33' bzw. 34' schwenkbar gelagert sind. Die Deckel 33 und 34, die aus Metall oder Kunststoff und auch aus transparentem Material (Glasdeckel) hergestellt sein können, verschließen in der Schließstellung (Fig.11 und Fig. 19) die hintere Dachöffnung 13.

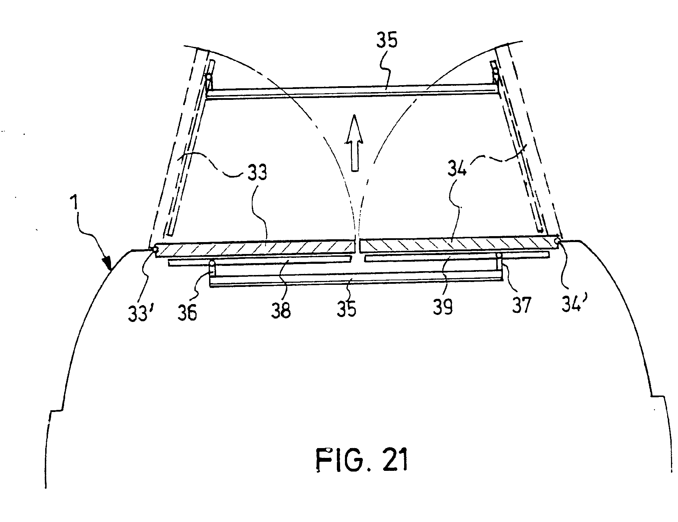

Ein Ausstellmechanismus für die Deckel 33 und 34 enthält eine hintere Querstange 35, die an ihren jeweiligen Enden 36 und 37 mittels Roll- oder Gleitelementen in zugeordneten Führungen 38 und 39 an dem linken Deckel 33 bzw. dem rechten Deckel 34 innenseitig und rückseitig in Querrichtung angeordnet sind. Ein entsprechende vordere Querstange 35' mit den gleichen Lager- und Führungselementen ist im vorderen Bereich der beiden Deckel 33 und 34 vorgesehen. Zum Öffnen der beiden Deckel 33 und 34 werden die beiden Querstangen 35 und 35', nachdem eine Verschlußeinrichtung für die beiden Deckel 33 und 34 entriegelt worden ist, manuell nach oben gedrückt, wobei ihre Enden 36 und 37 in den Führungen 38 und 39 entlang gleiten und die beiden Deckel 33 und 34 um ihre Schwenkachsen 33' bzw. 34' aufklappen, bis die geöffnete Stellung erreicht ist (Fig. 12, 20 und 21), in der sie je nach Auslegung annähernd vertikal oder auch geneigt stehen. Die Enden 36 und 37 können in den Führungen 38 und 39 in der oberen Endstellung oder auch in Zwischenstellungen arretiert werden, so daß eine Öffnungsstellung der Deckel 33 und 34 fest einstellbar und arretierbar ist.

Die in einer Öffnungsstellung der Deckel 33 und 34 arretierten Querstangen 35 und 35' können als Lasttrageinrichtung dienen und Lasten oder Gegenstände 40 wie z. B. ein Surfboard tragen. In einer einfachen Variante kann der Ausstellmechanismus auch nur eine Querstange aufweisen. Gemäß einer Variante enthält der Ausstellmechanismus einen Antriebseinrichtung, mit der die eine oder die beiden Querstangen entlang ihrer Führungen an den Deckeln 33 und 34 verschoben werden und dabei die Deckel 33 und 34 auf- und zuschwenken. Der Ladeboden 16 und die Laderaumtür 4 und ihre Funktion und Verstellbarkeit entsprechen dem eingangs beschriebenen Ausführungsbeispiel.

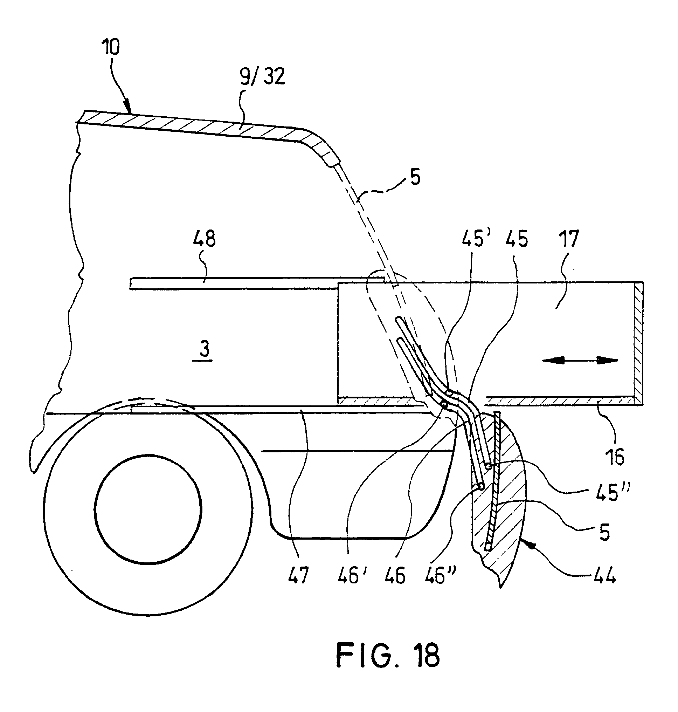

Ein weiteres Ausführungsbeispiel des Fahrzeugs 1 enthält das anhand der Fig. 11 bis 13 und 19 bis 21 beschriebene Fahrzeugdach mit den beiden Deckeln 33 und 34 sowie den ausfahrbaren Ladeboden 16, jedoch eine unterschiedlich gelagerte Laderaumtür 44. Die Laderaumtür 44 (siehe Fig. 18) ist mittels eines Schwenkmechanismus mit zwei Schwenklenkern 45 und 46 in der Art einer Parallelverschwenkung aus ihrer Schließstellung in der Laderaumöffnung 15 (mit unterbrochenen Linien dargestellt) in ihre abgesenkte Offenstellung (durchgezogene Linien) verstellbar. Die beiden Schwenklenker 45 und 46 sind am einen Ende um jeweilige voneinander beabstandete Querschwenkachsen 45' und 46' an der Karosserie schwenkbar gelagert und am anderen Ende in Gelenken mit den voneinander beabstandeten Querschwenkachsen 45" und 46" schwenkbar mit der Laderaumtür 44 verbunden. Eine Antriebseinrichtung zum Verschwenken der Schwenklenker 45 und 46 ist nicht dargestellt.

Der Ladeboden 16 ist über eine zentrale untere Führungsschiene 47 z. B. mittels einer Teleskopmechanik geführt. Die Seitenwände 17 und 18 sind an ihren Oberrädern mittels jeweils einer fahrzeugfesten Führung 48 verschiebbar gelagert.

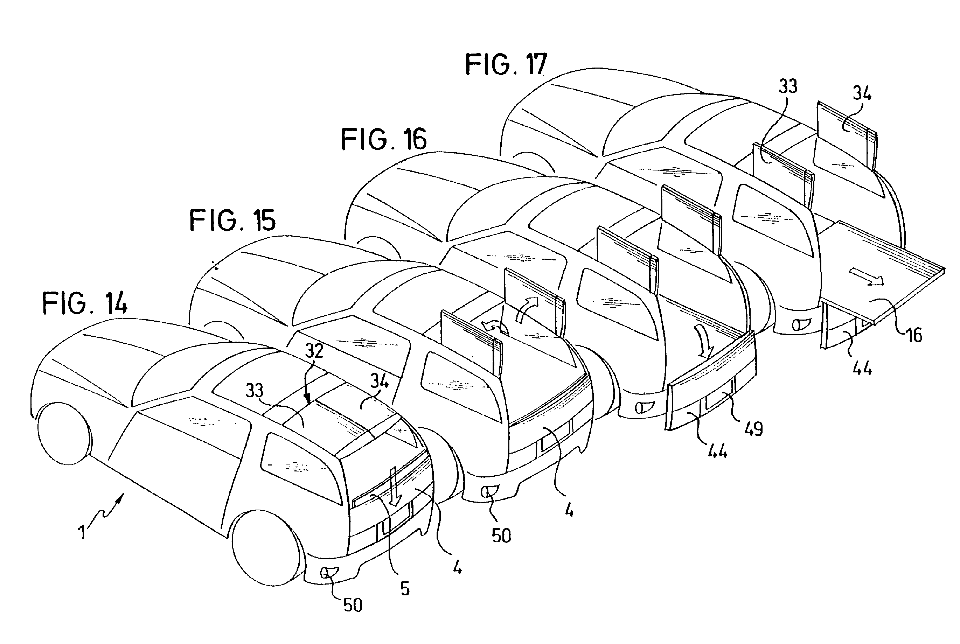

Die Laderaumtür 44 enthält ebenfalls eine Heckscheibe 5, die in die Laderaumtür 44 versenkbar ist. Die geöffnete Laderaumtür 44 (Fig. 16 und 18) ist in ihrer herabgeschwenkten Stellung platzsparend angeordnet und der unmittelbare heckseitige Zutritt zum Laderaum und zum Ladeboden 16 ist nahezu unbehindert. Des weiteren bleibt ein an der Laderaumtür 44 außen angebrachtes Nummernschild 49 im Sichtbereich, wenn das Fahrzeug bei herabgeschwenkter Laderaumtür 44 im Fahrbetrieb genutzt wird.

Bei herabgeschwenkter Laderaumtür 44 kann der Ladeboden 16 nach hinten verschoben oder ausgefahren werden (siehe Fig. 17), wobei der in Fig. 17 dargestellte Ladeboden 16 sowohl mit wie auch ohne Seitenwände 17, 18 gebildet sein kann.

Ein Auspuffende 50 ist bei dieser herabschwenkbaren Laderaumtür 44 seitlich nach außen versetzt angeordnet, so daß der Abgasstrom nicht gegen die herabgeschwenkte Laderaumtür 44 geleitet wird, von wo er in den Laderaum strömen könnte.

Alle Merkmale der unterschiedlichen Ausführungsbeispiele können in zusätzlichen Varianten als Ergänzung zu den beschriebenen Beispielen kombiniert werden.

### Bezugszeichenliste

- 1: Personenkraftwagen
- 2: Fahrzeugheck
- 3: Laderaum
- 4: Laderaumtür
- 5: Heckscheibe
- 6: Unterteil
- 7: Oberrand
- 8: Hinterrand
- 9: hinteres Dachteil
- 10: Fahrzeugdach
- 11: vorderer Dachabschnitt
- 12: Deckel
- 13: hintere Dachöffnung
- 14: Dachholm
- 15: Laderaumöffnung
- 16: Ladeboden
- 17: Seitenwand
- 18: Seitenwand
- 19: Scharniereinrichtung
- 20: Vertikalachse
- 21: Karosserieteil
- 22: Kreisbogenführung
- 23: Lagerteil
- 24: Seitenrand
- 25: Dichtung
- 26: Schließeinrichtung
- 27: Schloß
- 28: Riegelzapfen
- 29: Querachse
- 30: hinterer Rand
- 31: Zughebel
- 32: Deckeleinrichtung
- 33: linker Deckel
- 34: rechter Deckel
- 33': Schwenkachse
- 34': Schwenkachse
- 35: Querstange
- 36: Ende
- 37: Ende
- 38: Führung
- 39: Führung
- 40: Gegenstand
- 44: Laderaumtür
- 45: Schwenklenker
- 45': Querschwenkachse
- 45": Querschwenkachse
- 46: Schwenklenker
- 46': Querschwenkachse
- 46": Querschwenkachse
- 47: untere Führungsschiene
- 48: Führung
- 49: Nummernschild
- 50: Auspuffende

## Patentansprüche

1. Kraftfahrzeug, insbesondere Personenkombikraftwagen, mit einem im Fahrzeugheck (2) angeordneten Laderaum (3), einem heckseitig ausfahrbaren Ladeboden (16) und einer Laderaumtür (4) für die heckseitige Laderaumöffnung (15), die an dem Ladeboden (16) schwenkbar gelagert ist.

2. Kraftfahrzeug nach Anspruch 1,
**dadurch gekennzeichnet, daß** die Laderaumtür (4) am Hinterende des Ladebodens (16) um eine Querachse schwenkbar gelagert ist und in Schließstellung mit dem Ladeboden (16) ein- und ausfahrbar ist.

3. Kraftfahrzeug nach Anspruch 1 oder 2,
**dadurch gekennzeichnet, daß** der Ladeboden (16) zumindest eine nach oben ragende Seitenstruktur enthält.

4. Kraftfahrzeug nach Anspruch 3,
**dadurch gekennzeichnet, daß** die Laderaumtür (4) an der Seitenstruktur um eine Vertikalachse (20) schwenkbar gelagert ist.

5. Kraftfahrzeug nach einem der Ansprüche 1 bis 4,
**dadurch gekennzeichnet, daß** der Ladeboden (16) beidseits Seitenwände (17, 18) enthält und die Laderaumtür (4) an einer der Seitenwände (18) um eine Vertikalachse (20) schwenkbar gelagert ist.

6. Kraftfahrzeug nach einem der Ansprüche 1 bis 5,
**dadurch gekennzeichnet, daß** die Laderaumtür (4) an ihrem Oberende an das Hinterende des Fahrzeugdaches (10) angrenzt.

7. Kraftfahrzeug nach einem der Ansprüche 1 bis 6,
**dadurch gekennzeichnet, daß** die Laderaumtür (4) ein Unterteil (6) und ein am Unterteil (6) gelagertes Oberteil (5) aufweist, das an oder in das Unterteil (6) absenkbar ist.

8. Kraftfahrzeug nach Anspruch 7,
**dadurch gekennzeichnet, daß** das Oberteil eine am Unterteil (6) geführte Heckscheibe (5) ist.

9. Kraftfahrzeug nach Anspruch 7 oder 8,
**dadurch gekennzeichnet, daß** die Laderaumtür (4) an ihrem Oberrand ohne Querrahmen gebildet ist.

10. Kraftfahrzeug nach einem der Ansprüche 1 bis 9,
**dadurch gekennzeichnet, daß** das Fahrzeugdach (10) einen bewegbaren Hinterabschnitt (9) zum Schließen oder Freigeben einer hinteren Dachöffnung (13) aufweist.

11. Kraftfahrzeug nach Anspruch 10,
**dadurch gekennzeichnet, daß** die hintere Dachöffnung (13) ohne Begrenzung durch einen hinteren Dachquerrahmen in die von der Laderaumtür (4) verschließbare Laderaumöffnung (15) übergeht.

12. Kraftfahrzeug nach einem der Ansprüche 1 bis 11,
**dadurch gekennzeichnet, daß** der Hinterabschnitt (9) des Fahrzeugdaches (10) ein bewegbarer Deckel ist, der am Fahrzeugdach (10) zwischen seiner hinteren Schließstellung und einer vorderen Offenstellung verschiebbar ist.

13. Kraftfahrzeug nach einem der Ansprüche 1 bis 12,
**dadurch gekennzeichnet, daß** an der einen Seitenwand (17 bzw. 18) zumindest eine Schwenklagereinrichtung (19) für die seitlich schwenkende Laderaumtür (4) angeordnet ist und daß an der gegenüberliegenden Seitenwand (18 bzw. 17) eine Schließeinrichtung (26) für die Laderaumtür (4) vorgesehen ist.

14. Kraftfahrzeug nach einem der Ansprüche 1 bis 13,
**dadurch gekennzeichnet, daß** die Schwenklagereinrichtung (19) eine bogenförmige Führung aufweist, die eine außerhalb der Laderaumtür (4) liegende Vertikalschwenkachse (20) festlegt.

15. Kraftfahrzeug nach einem der Ansprüche 1 bis 14,
**dadurch gekennzeichnet, daß** sich die Laderaumtür (4) seitlich über den Ladeboden (16) bzw. die Seitenwände (17, 18) hinaus erstreckt und an der Fahrzeugkarosserie dicht anliegt.

16. Kraftfahrzeug nach einem der Ansprüche 1 bis 15,
**dadurch gekennzeichnet, daß** der Ladeboden (4) über eine zentrale untere Führung, insbesondere eine Teleskopführung, an der Fahrzeugkarosserie unterhalb des Ladebodens (16) verschiebbar gelagert ist.

17. Kraftfahrzeug nach einem der Ansprüche 1 bis 16,
**dadurch gekennzeichnet, daß** der Ladeboden (16) an seinen beiden Seitenwände (17, 18) über karosseriefeste Führungen gelagert ist.
